# DEMANDE DE BREVET EUROPEEN

(11) **EP 0 803 952 A1**
(43) Date de publication de la demande: **29.10.1997**
(21) Numéro de dépôt: 97400907.8
(22) Date de dépôt: 22.04.1997
(51) Int. Cl.: H02G 3/04, H02G 3/02

(54) **Conduit annelé à plages de marquage**

(30) Priorité: 24.04.1996 FR 9605180
(71) Demandeur: Société d'Usinage des Tubes pour l'Electricité, 54700 Pont-à-Mousson (FR)
(72) Inventeur: Centazzo, Didier, 54700 Pont-a-Mousson (FR)
(74) Mandataire: CABINET BONNET-THIRION

(57) **Abrégé**

Il s'agit d'un conduit annelé dont la paroi (10), ondulée longitudinalement dans son épaisseur, forme transversalement des anneaux (12), avec, de place en place, interrompant localement au moins un tel anneau (12), au moins une plage de marquage (15).

Suivant l'invention, la plage de marquage (15) présente au moins localement un état de surface régulier dont il résulte qu'elle est apte à recevoir, ultérieurement, à la demande, une quelconque marque, par exemple par simple graphie à l'aide d'un crayon-feutre.

Application aux conduits annelés destinés au logement et à la protection d'au moins un câble électrique.

## Description

La présente invention concerne d'une manière générale les conduits annelés, c'est-à-dire les conduits du genre dont la paroi, ondulée longitudinalement dans son épaisseur, en pratique suivant un pas régulier, forme transversalement des anneaux.

Ces conduits sont couramment utilisés pour le logement et la protection d'un ou plusieurs câbles électriques, et, le plus souvent, ils sont implantés dans des sols ou des cloisons, en étant en pratique noyés dans ceux-ci.

Seules émergent alors de ces sols ou cloisons les extrémités de ces conduits.

Il a déjà été proposé d'assurer une certaine identification de ces conduits en prévoyant de place en place sur eux une plage, dite ci-après par simple commodité plage de marquage, interrompant localement au moins l'un de leurs anneaux.

Mais, dans les réalisations de ce type connues à ce jour, cette plage de marquage est pourvue dès l'origine d'une marque, cette marque constituant en pratique une référence se rapportant par exemple au calibre du conduit concerné et/ou au nom de son fabricant.

Plutôt qu'une réelle plage de marquage, il s'agit donc plus simplement d'une plage déjà marquée.

En outre, la marque qu'elle porte intervient le plus souvent en saillie, à la manière d'une gravure en relief, et elle s'oppose donc par elle-même à tout éventuel marquage ultérieur.

Or il s'avère que, indépendamment des caractéristiques propres d'un conduit ou de son fabricant, il est nécessaire, à la mise en oeuvre de ce conduit, de procéder à un certain marquage de celui-ci, pour en préciser la destination et/ou la nature du ou des câbles qu'il protège.

A ce jour, ce marquage est le plus souvent assuré en rapportant, sur les extrémités destinées à émerger du sol ou de la cloison concernée, des fiches de couleur, réalisées par exemple par des bouts de ruban adhésif venant dûment ceinturer localement le conduit, ou par des étiquettes cartonnées dûment ficelées sur celui-ci.

Un tel mode de marquage est relativement incertain, notamment dans la mesure où, faisant appel à des éléments rapportés sur le conduit, il peut être sujet à une désolidarisation ultérieure intempestive par rapport à celui-ci, et, pour l'installateur, il nécessite d'avoir en permanence à sa disposition de tels éléments, ce qui n'est pas toujours nécessairement le cas.

La présente invention a d'une manière générale pour objet une disposition permettant au contraire d'assurer de manière particulièrement simple et sûre le marquage recherché.

De manière plus précise, elle a pour objet un conduit annelé du genre dont la paroi, ondulée longitudinalement dans son épaisseur, forme transversalement des anneaux, avec, de place en place, interrompant localement au moins un tel anneau, au moins une plage de marquage, ce conduit annelé étant d'une manière générale caractérisé en ce que la plage de marquage présente au moins localement un état de surface régulier dont il résulte qu'elle est apte à recevoir, à la demande, une quelconque marque.

Dépourvue de toute saillie locale, cette plage de marquage peut par exemple recevoir par simple graphie la marque recherchée, cette marque lui étant par exemple appliquée à l'aide d'un simple "marqueur" du type des crayons-feutres.

Ainsi, à la différence des plages de marquage déjà connues, la plage de marquage suivant l'invention constitue une réelle plage de marquage, c'est-à-dire une plage de marquage qui, libre jusque-là de toute marque, permet, à l'installateur, lors de la mise en oeuvre du conduit, d'y inscrire à son gré toute marque de son choix.

Les caractéristiques et avantages de l'invention ressortiront d'ailleurs de la description qui va suivre, à titre d'exemple, en référence aux dessins schématiques annexés sur lesquels :
la figure 1 est une vue partielle en perspective d'un conduit annelé suivant l'invention ;
la figure 2 en est, à échelle supérieure, une vue partielle en coupe longitudinale, suivant la ligne II-II de la figure 1 ;
la figure 3 en est une vue en coupe transversale, suivant la ligne III-III de la figure 2 ;
la figure 4 en est une vue en plan, suivant la flèche IV de la figure 2.

Tel qu'illustré sur ces figures, et de manière connue en soi, la paroi 10 du conduit annelé 11 suivant l'invention, c'est-à-dire la paroi tubulaire de forme générale cylindrique de ce conduit annelé 11, est ondulée longitudinalement dans son épaisseur, suivant, en pratique, un pas P régulier, et elle forme ainsi transversalement des anneaux 12.

En pratique, dans la forme de réalisation représentée, la paroi 10 a, globalement, en section transversale, un contour circulaire, et il en est donc de même pour les anneaux 12.

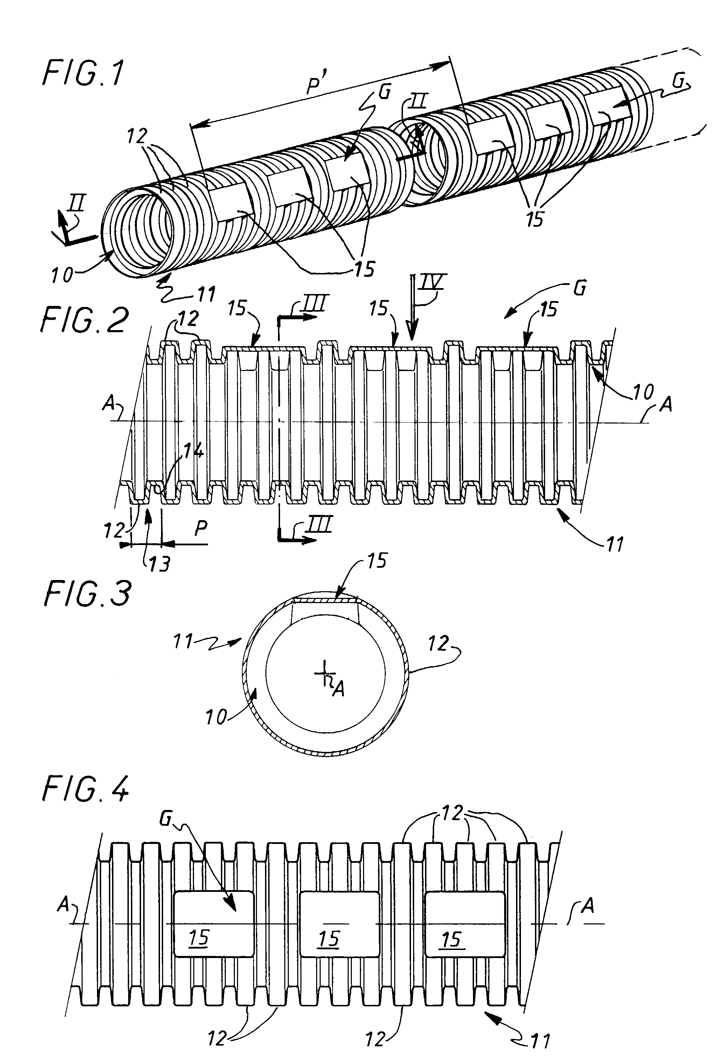

Soit A l'axe commun aux anneaux 12, tel que schématisé en traits interrompus sur les figures 2 et 4, et tel que repéré par sa trace sur la figure 3.

En pratique, chacun des anneaux 12 forme la partie en relief d'une onde 13 de la paroi 10, et il est séparé de l'anneau 12 suivant par la partie en creux 14 de cette onde 13.

Dans la forme de réalisation représentée, la portion de crête des anneaux 12 est globalement plate, et il en est sensiblement de même pour la portion de fond de la partie en creux 14 des ondes 13 correspondantes.

De manière connue en soi, enfin, le conduit annelé 11 suivant l'invention comporte, de place en place, et suivant des dispositions décrites plus en détail ultérieurement, au moins une plage de marquage 15, qui interrompt localement au moins un anneau 12.

Suivant l'invention, cette plage de marquage 15 présente, au moins localement, un état de surface régulier dont il résulte qu'elle est apte à recevoir, ultérieurement, à la demande, une quelconque marque non représentée.

Préférentiellement, et tel que représenté, cette plage de marquage 15 présente un état de surface régulier sur la totalité de sa surface.

Par exemple, son état de surface est légèrement rugueux, pour y faciliter l'application d'une quelconque marque par simple graphie à l'aide d'un quelconque "marqueur" de type crayon-feutre, ainsi que pour y favoriser une bonne tenue mécanique de l'encre correspondante.

La plage de marquage 15 peut par exemple être affectée à cet effet d'un certain granité.

Quoi qu'il en soit, elle est, suivant l'invention, dépourvue de toute saillie locale.

Dans la forme de réalisation représentée, la plage de marquage 15 suivant l'invention est sensiblement plane, et elle s'étend sensiblement parallèlement à l'axe A des anneaux 12.

Préférentiellement, la plage de marquage 15 suivant l'invention est cependant tout entière contenue dans le contour transversal hors tout des anneaux 12.

Autrement dit, elle s'étend préférentiellement suivant une corde des anneaux 12, tel que représenté.

Préférentiellement, également, la plage de marquage 15 suivant l'invention s'étend entre la portion de crête des anneaux 12 et la portion de fond de la partie en creux 14 des ondes 13 correspondantes, sans empiéter sur le volume interne utile du conduit annelé 11.

Préférentiellement, également, la plage de marquage 15 suivant l'invention s'étend, longitudinalement, sur au moins deux anneaux 12.

Par exemple, et tel que représenté, elle s'étend longitudinalement sur trois anneaux 12, de l'un à l'autre des flancs opposés de ceux-ci.

Préférentiellement, enfin, la plage de marquage 15 suivant l'invention a, en plan, un contour globalement quadrangulaire, et, par exemple, rectangulaire, tel que représenté.

Pour un conduit annelé 11 de 20 mm de diamètre extérieur, la plage de marquage 15 suivant l'invention peut ainsi avoir globalement la forme d'un pavé ayant environ 8 mm de large et 8 mm de long.

Mais, bien entendu, ces valeurs numériques ne sont données ici qu'à titre d'exemple indicatif, sans qu'il puisse en résulter une quelconque limitation de l'invention.

Elles peuvent en effet varier très largement, notamment en fonction du pas P des ondes 13.

En pratique, dans la forme de réalisation représentée, le conduit annelé 11 suivant l'invention comporte, de place en place, un groupe G de plages de marquage 15 formé d'au moins deux plages de marquage 15 identiques échelonnées longitudinalement l'une par rapport à l'autre le long de l'axe A des anneaux 12 et proches l'une de l'autre.

Par exemple, et tel que représenté, ce groupe G comporte successivement trois plages de marquage 15, et chacune de celles-ci est séparée de la suivante par un anneau 12.

Tel que schématisé à la figure 1, les groupes G de plages de marquage 15 interviennent à un pas P' régulier.

Ce pas P' peut par exemple être de l'ordre de 300 mm, mais, comme précédemment, cette valeur n'est donnée ici qu'à titre indicatif, sans qu'il puisse en résulter une quelconque limitation de l'invention.

En toute hypothèse, les plages de marquage 15 d'un même groupe G peuvent avantageusement recevoir des marques différentes, ce qui facilite l'établissement d'une référence plus complexe.

Par exemple, ces marques peuvent être constituées par des caractères et/ou des chiffres.

Comme précédemment indiqué, elles peuvent être appliquées par graphie.

Mais, en variante, elles peuvent tout aussi bien être appliquées par collage.

En pratique, le conduit annelé suivant l'invention peut être réalisé de manière connue en soi en une quelconque matière synthétique, telle que par exemple du polychlorure de vinyle ou du polypropylène, par une extrusion suivie d'une mise en forme par moulage, et il s'avère que les plages de marquage suivant l'invention ne sont avantageusement pas de nature à nuire à ses caractéristiques mécaniques, et, notamment, à sa résistance au cisaillement.

Bien entendu, la présente invention ne se limite pas à la forme de réalisation décrite et représentée, mais englobe toute variante d'exécution.

## Revendications

1. Conduit annelé du genre dont la paroi (10), ondulée longitudinalement dans son épaisseur, forme transversalement des anneaux (12), avec, de place en place, interrompant localement au moins un tel anneau (12), au moins une plage de marquage (15), caractérisé en ce que la plage de marquage (15) présente au moins localement un état de surface régulier dont il résulte qu'elle est apte à recevoir, à la demande, une quelconque marque.

2. Conduit annelé suivant la revendication 1, caractérisé en ce que la plage de marquage (15) présente un état de surface régulier sur la totalité de sa surface.

3. Conduit annelé suivant l'une quelconque des revendications 1, 2, caractérisé en ce que la plage de marquage (15) présente un état de surface légèrement rugueux.

4. Conduit annelé suivant l'une quelconque des revendications 1 à 3, caractérisé en ce que la plage de marquage (15) est dépourvue de toute saillie locale.

5. Conduit annelé suivant l'une quelconque des revendications 1 à 4, caractérisé en ce que la plage de marquage (15) est sensiblement plane, et elle s'étend sensiblement parallèlement à l'axe (A) des anneaux (12).

6. Conduit annelé suivant la revendication 5, caractérisé en ce que la plage de marquage (15) est tout entière contenue dans le contour transversal hors tout des anneaux (12).

7. Conduit annelé suivant l'une quelconque des revendications 1 à 6, caractérisé en ce que, longitudinalement, la plage de marquage (15) s'étend sur au moins deux anneaux (12).

8. Conduit annelé suivant l'une quelconque des revendications 1 à 7, caractérisé en ce qu'il comporte, de place en place, un groupe (G) de plages de marquage (15) formé d'au moins deux plages de marquage (15) identiques échelonnées longitudinalement l'une par rapport à l'autre le long de l'axe (A) des anneaux (12) et proches l'une de l'autre.
